(19) **Europäisches Patentamt / European Patent Office / Office européen des brevets**

(11) **EP 2 783 879 B1**

(12) **EUROPEAN PATENT SPECIFICATION**

(45) Date of publication and mention of the grant of the patent:
**18.11.2015 Bulletin 2015/47**

(51) Int Cl.:
*B60B 21/02* *(2006.01)*  *B60C 19/00* *(2006.01)*
*B60B 21/12* *(2006.01)*  *G10K 11/172* *(2006.01)*

(21) Application number: **14162263.9**

(22) Date of filing: **28.03.2014**

(54) **Vehicle wheel**

Fahrzeugrad

Roue de véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013 JP 2013071785**

(43) Date of publication of application:
**01.10.2014 Bulletin 2014/40**

(73) Proprietor: **Honda Motor Co., Ltd.**
**Tokyo 107-8556 (JP)**

(72) Inventor: **Kamiyama, Youichi**
**Saitama, 351-0193 (JP)**

(74) Representative: **Weickmann & Weickmann**
**Postfach 860 820**
**81635 München (DE)**

(56) References cited:
**EP-A1- 2 052 876**    **JP-A- 2008 030 505**

**Description**

1. Field of the Invention

The present invention relates to a vehicle wheel.

2. Description of the Related Art

Conventionally, as a wheel capable of reducing road noise caused by air column resonance in a tire air chamber, a wheel has been disclosed which has Helmholtz resonators each including an additional air chamber communicated with a tire air chamber through a communication through hole and being arranged equidistantly in a wheel circumferential direction, and the communication through holes for the four Helmholtz resonators are arranged with an angle interval of 90 degree around a rotation center of the wheel ( for example, see JP 2012-51397 A). On the other hand, there is a request for reducing the number of the Helmholtz resonators to reduce a manufacturing cost and a weight of a wheel. However, when the number of the Helmholtz resonators is reduced, the road noise caused by the air column resonance noise may be suppressed insufficiently. More specifically, the air column resonance noise can be reduced or cannot be silenced in accordance with the position in the wheel circumferential direction, i.e., a so-called "unevenness in noise reduction" may occur.

JP 2008 030505 A, on which the preamble of claim 1 is based, discloses in Fig 5(b) an additional air chamber member.

EP 2052876 A1 discloses an additional air chamber member which has only one Helmholtz resonator and thus does not have a partitioning wall.

SUMMARY OF THE INVENTION

An object of the present invention is to provide a vehicle wheel with reduction in a manufacturing cost and a weight thereof to avoid unevenness in noise reduction, even in the case where the vehicle wheel is provided with four Helmholtz resonators.

The present invention provides a vehicle wheel in accordance with claim 1.

The vehicle wheel comprises: four Helmholtz resonators each including an additional air chamber communicating with a tire air chamber through a tube including a communication through hole. The communication through hole of each of the four Helmholtz resonators is arranged at an angle interval of substantially 90 degrees around a wheel rotation center axis of the vehicle wheel. The four Helmholtz resonators include a first pair of two of the four Helmholtz resonators and a second pair of remaining two of the four Helmholtz resonators. The first pair of the four Helmholtz resonators are integrally formed each other to form a first additional air chamber member. The second pair of the four Helmholtz resonators are integrally formed each other to form a second additional air chamber member. Each of the first and second additional air chamber members arranged in the tire air chamber includes the two additional air chambers therein partitioned therebetween, each of the two additional air chambers includes the communication through hole communicating the additional air chamber with the tire air chamber of the vehicle wheel individually.

In the vehicle wheel, four Helmholtz resonators are divided into two pairs and the two Helmholtz resonators in each of the pairs are integrally formed to have an additional air chamber member. The number of the first additional air chamber members can be reduced from four to two. This provides a cost reduction and simplicity of manufacturing processes, and weight saving of the vehicle wheel while the noise reduction effect provided by the four Helmholtz resonators against the air column resonance noise is maintained.

The first and second additional air chamber members may be arranged in the tire air chamber so as to face each other across a wheel rotation center axis Ax of the vehicle wheel.

According to this vehicle wheel, a wheel unbalance caused by one of the first and second first additional air chamber members can be cancelled out by another wheel unbalance caused by the other additional air chamber member. This eliminates the necessity of counter weight for wheel balance correction and further reduces the wheel weight.

In the vehicle wheel, at least one of the first and second additional air chamber members is formed to have a longitudinal direction thereof in the wheel circumferential direction with a resin, and the two additional air chambers of the at least one of the first and second additional air chamber members are partitioned with the partition wall so as to be arranged side by side in a wheel width direction of the vehicle wheel.

In this vehicle wheel, the additional air chamber member is formed with a resin to have a wall whose longitudinal direction agreeing with a wheel circumferential direction, and the two additional air chambers of the at least one of the first and second additional air chamber members are partitioned with the wall along a circumferential direction, which enhances a stiffness of the additional air chambers made of a resin.

BRIEF DESCRIPTION OF THE DRAWINGS

The object and features of the present invention will become more readily apparent from the following detailed description taken in conjunction with the accompanying drawings in which:

Fig. 1 is a perspective view of a vehicle wheel according to an embodiment of the present invention.
Fig. 2 is a perspective view showing whole of the additional air chamber according to the embodiment.
Fig. 3 is a partial enlarged cross section view of the additional air chamber disposed on a well, taken along III-III in Fig. 1.
Fig. 4 is a perspective view, partially taken along IV-IV in Fig. 2, of the additional air chamber member.
Fig. 5 is a side view schematically showing the first and second additional chambers, and positions of the through holes.
Fig. 6A and 6B are schematic cross section views of the additional air chamber members which are taken along a curved plane having a curvature of additional air chambers arranged on the well of the wheel in the longitudinal direction.
Figs. 7A to 7C are schematic cross section views of the additional air chamber members in which two Helmholtz resonators are integrally formed such that two additional air chambers are disposed side by side in a vehicle width direction through a portioning wall, and is a schematic cross section in which the additional air chamber formed integrally, wherein the cross section are taken along a curved plane extending along a curvature in the longitudinal direction of the additional air chamber member.
Fig. 8A and 8B are side views schematically showing the first and second additional chambers, and positions of the through holes of the vehicle wheel according to another embodiment.

DETAILED DESCRIPTION OF THE INVENTION

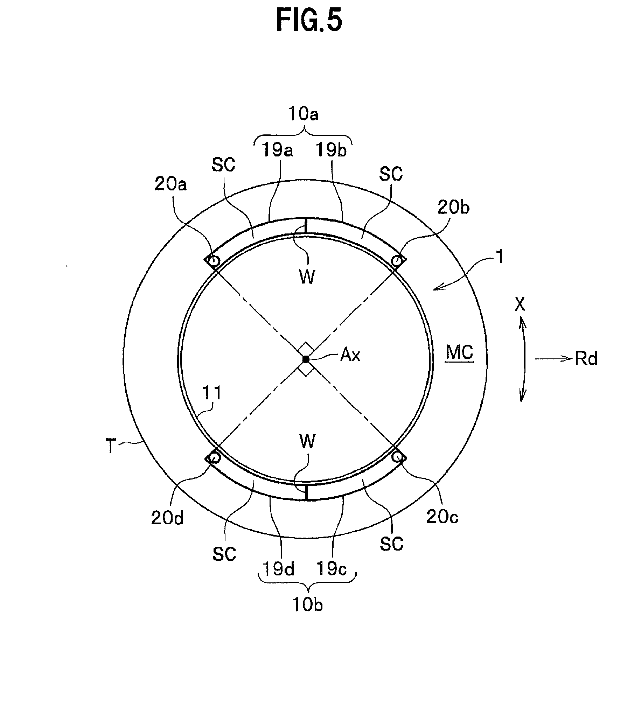

A vehicle wheel according to the present invention includes Helmholtz resonators disposed on an outer circumferential surface of a well to reduce road noises caused by air column resonance in a tire air chamber.
The vehicle wheel includes two pairs of additional air chamber members on an outer circumferential surface of the well, each of the additional air chamber members includes two Helmholtz resonators formed integrally with each other. Communication through holes (total four communication through holes) installed on the Helmholtz resonators for communication with the tire air chamber are arranged at an angle interval of approximately 90 degree around a wheel rotation center. Here, "approximately 90 degree" means that an error range can be included in an accurate 90 degrees (hereinafter "approximately 90 degree" means similarly.
An embodiment of the present invention will be described in detail with reference to drawings blow.

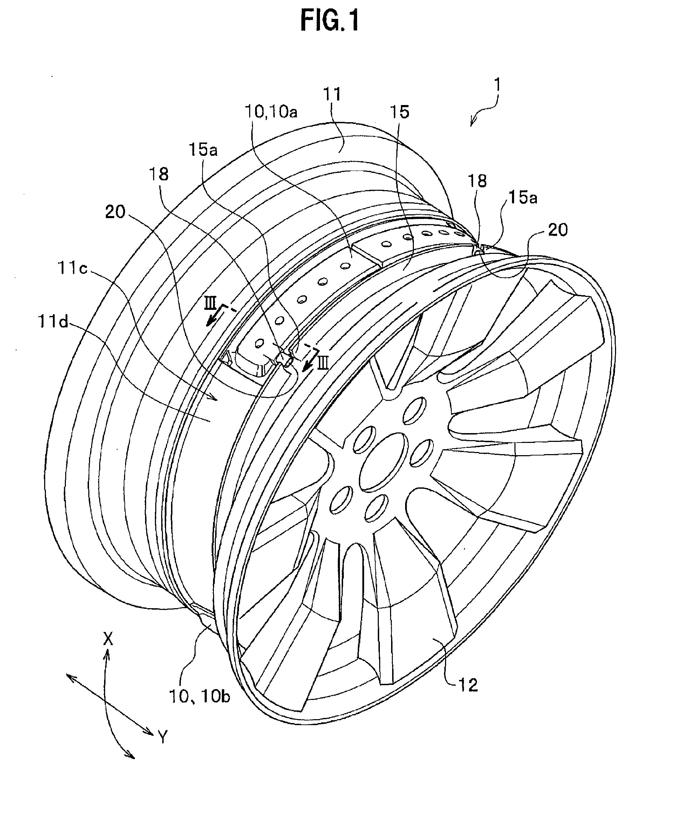

Fig. 1 is a perspective view of a vehicle wheel 1 according to the embodiment of the present invention.
The vehicle wheel 1 includes, as described in detail later, a first additional air chamber member 10a in which a first Helmholtz resonator 19a and a second Helmholtz resonator 19b (see Fig. 5) are formed integrally with each other and a second additional air chamber member 10b in which a third Helmholtz resonator 19c and a fourth Helmholtz resonator 19d (see Fig. 5) formed integrally with each other, are equi-distantly arranged (an angle interval of 180 degrees around the wheel rotation center). The vehicle wheel 1 according to the embodiment includes communication through holes 20a, 20b, 20c, 20d for four Helmholtz resonators 19a, 19b, 19c,19d (see Fig. 5) which are arranged at an angle interval of approximately 90 degree around the wheel rotation center.
The first additional air chamber member 10a and the second additional air chamber member 10b have the same configuration each other and are simply referred to as "additional air chamber member 10" when it is not necessary to distinguish between the first and second additional air chamber members each other in the following description. When it is not necessary to distinguish the first Helmholtz resonator 19a, the second Helmholtz resonator 19b, the third Helmholtz resonator 19c, the fourth Helmholtz resonator 19d each other, they are simply referred to as "a Helmholtz resonator(s) 19". Further when it is not necessary to distinguish the communication through holes 20a, 20b, 20c, 20d, they are simply referred to as "communication through hole 20". Next, an outline configuration of the vehicle wheel 1 is described below.
The vehicle wheel 1 according to the embodiment of the present invention includes, as shown in Fig. 1, a rim 11 and a disk 12 for connecting the rim 11 to a hub (not shown).
The rim 11 includes a well 11c hollowed inward in a wheel radial direction (on a side of the rotation center) between bead seats (not shown) of the tire formed on both sides in the wheel width direction Y shown in Fig. 1.
The well 11c is provided to drop beads of the tire thereinto when the beads of the tire (not shown) is installed in the rim 11. The well 11c in the embodiment is formed in a hollow cylindrical shape having substantially the same diameter in the wheel width direction Y.
In Fig. 1, a reference 11d denotes an outer circumferential surface of the well 11c. A reference 18 denotes a tube for forming a communication through hole 20. A reference 15 denotes a vertical wall having a ring shape installed on the outer circumferential surface 11d of the well 11c to extend in a circumferential direction of the rim 11. The additional air chamber member 10 is attached to a vertical wall 15 as described latter. A reference 15a denotes a notch in the vertical wall 15 through which a tube 18 is fitted when the additional air chamber member 10 is attached to the vertical wall 15. Then notches 15a are formed equi-distantly along a wheel circumferential direction X (an angle interval of approximately 90 degrees around the wheel rotation center) at four places. However, in Fig. 1, other two notches are omitted for sake of convenience in preparing the figure.

In Fig. 1, the reference Y indicates an arrow indicating the wheel width direction.

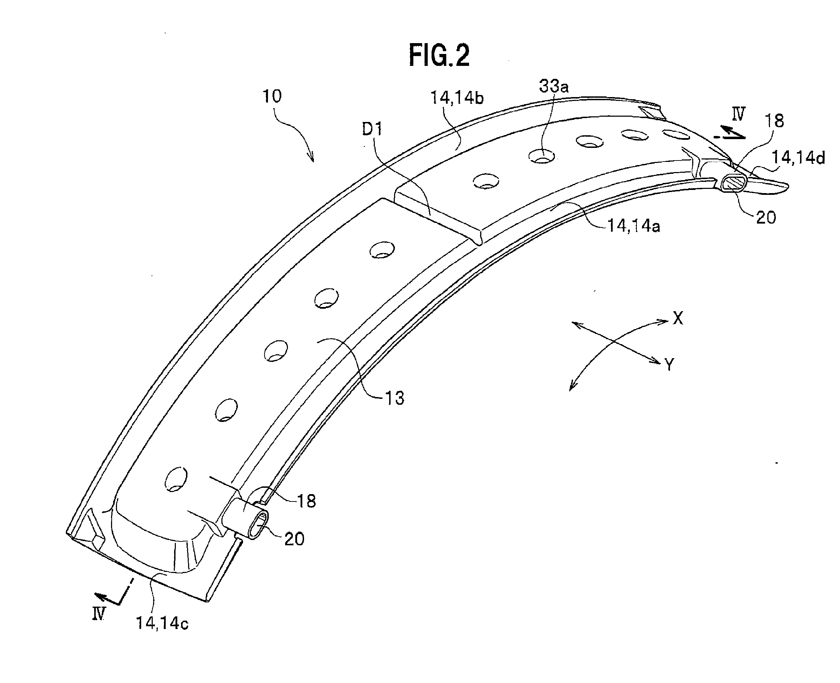

Fig. 2 is a perspective view showing whole of the additional air chamber 10 according to the embodiment.

The additional air chamber member 10 includes, as shown in Fig. 2, a member which is long in a direction and includes a body 13 having a hollow part described later, a pair of tubes 18 formed to have the communication through hole 20, and a rim part 14. The additional air chamber member 10 extending in a longitudinal direction thereof (a wheel circumferential direction X) is curved along the outer circumferential surface 11d (see Fig. 1) of the well 11c (see Fig. 1).

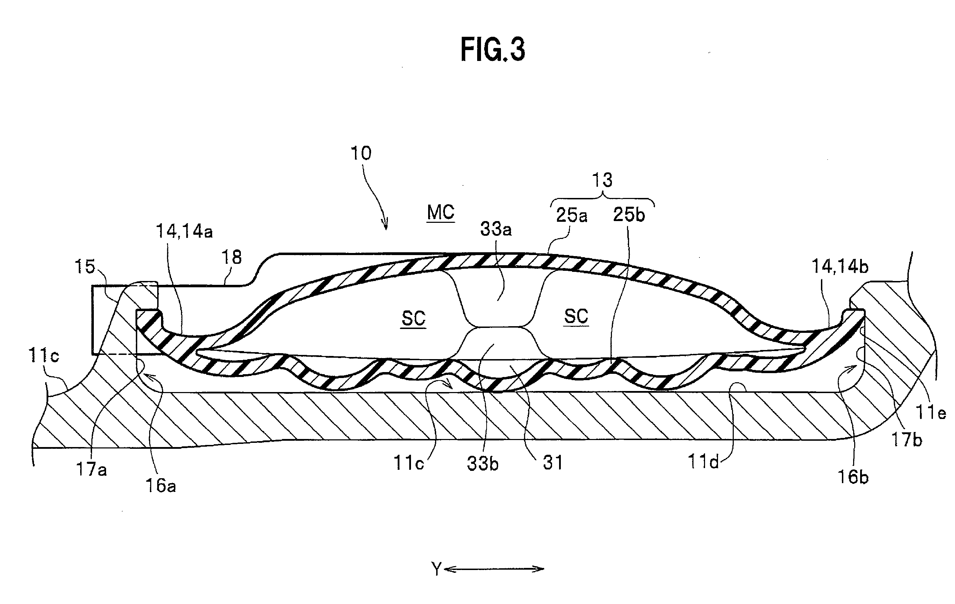

The pair of the tubes 18 are each formed to protrude in the wheel width direction Y from the body 13 at both ends in the longitudinal direction of the additional air chamber member 10 (wheel circumferential direction X). More specifically, inside the tube 18, the communication through hole 20 is formed for communication of the hollowed part (additional air chamber SC (see Fig. 3) described later) of the body 13 with an outside communication through hole 20.

The tube 18 extends from the body 13 with a length to be able to be fitted into the notch 15a of the vertical wall 15 when the additional air chamber member 10 is arranged on the outer circumferential surface 11d of the well 11c as shown in Fig. 1. In other words, the pair of the tubes 18 are installed at both ends in the longitudinal direction (the wheel circumferential direction X) of the additional air chamber member 10 to have an angle interval of approximately 90 degrees around the wheel rotation center each other when the additional air chamber members 10 arranged on the outer circumferential surface 11d of the well 11c.

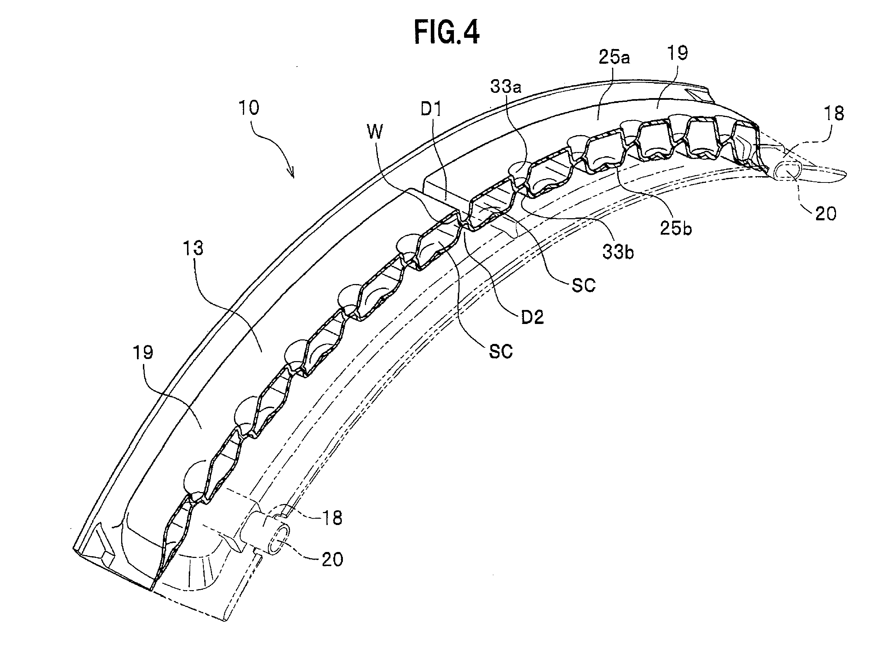

At a middle in the longitudinal direction of the body 13, a groove D1 is formed to extend in a width direction thereof (the wheel width direction Y). The groove D1 is formed, as described later, an upper plate 25a of the body 13 (see Figs. 3 and 4) is hollowed toward a bottom plate 25b (see Figs. 3 and 4). The groove D1 and a groove D2 (see Fig. 4) described later form a partitioning wall W described later by connecting a part of the upper plate 25a to a part of the bottom plate 25b integrally. More specifically, two additional air chambers SC (see Fig. 4) are formed to be arranged in line in the wheel circumferential direction X through the partitioning wall W as a boarder inside the body 13.

The communication through holes 20 formed in a pair of the tubes 18 provide communication between the additional air chambers SC with the outsides individually. In Fig. 2, a reference 33a denotes an upper connecting part describe later (see Fig. 3).

Fig. 3 is a partial enlarged cross section view of the additional air chamber member 10 disposed on the well 11c, taken along III-III in Fig. 1.

As shown in Fig. 3, the body 13 of the additional air chamber member 10 includes the bottom plate 25b and the upper plate 25a which are provided to form the additional air chamber SC therebetween. In the embodiment the upper plate 25a and the bottom plate 25b have the same thickness. However, the upper plate 25a and the bottom plate 25b may have different thicknesses.

The upper plate 25a is curved to have a part protruding upward above the bottom plate 25b arranged along the outer circumferential surface 11d of the well 11c.

The upper plate 25a includes an upper connecting part 33a formed at a part forming the body 13. The upper connecting part 33a is formed so that the upper plate 25a is hollowed toward the additional air chamber SC and shows a circle shape in plan view. Ten upper connecting parts 33a are formed in a line on a center line of the body 13 along a longitudinal direction of the additional air chamber member 10 (the wheel circumferential direction X) as shown in Fig. 2.

Returning to Fig. 3 again, the bottom plate 25b includes bottom side connecting parts 33b formed at a position corresponding to the upper connecting parts 33a.

These bottom side connecting parts 33b are formed so that the bottom plate 25b is hollowed toward a side of the additional air chamber SC and shows a circle in plan view. These bottom side connecting parts 33b connect the upper plate 25a and the bottom plate 25b such that a tip of the bottom side connecting part 33b is connected to a tip of the upper connecting part 33a integrally.

In the present invention, there may be a configuration in which the body 13 does not include the upper connecting part 33a and the bottom side connecting part 33b.

Fig. 4 is a perspective view, partially taken along IV-IV in Fig. 2, of the additional air chamber member 10.

An inside of the additional air chamber member 10 is partitioned into two additional air chambers SC with the partitioning wall W.

The partitioning wall W is formed by connecting parts of the upper plate 25a and the bottom plate 25b integrally as a result of formation of the groove D1, as described above such that the upper plate 25a is hollowed toward the inside of the body 13. More specifically, the partitioning wall W in the embodiment, the groove D2 is formed such that the bottom plate 25b is hollowed toward the inside of the body 13 corresponding to a location of a groove D1. The parts of the upper plate 25a and the bottom plate 25b are integrally connected by existence of the groove D1 and the groove D2.

The partitioning wall W according to the present invention is provided to form the two additional air chambers SC by partitioning the hollow space of the body 13. For example, there may be a configuration in which the upper plate 25a and the bottom plate 25b are connected by the presence of the groove D1 without forming the groove D2. In addition, there may be another configuration in which the upper plate 25a and the bottom plate 25b are connected by the presence of only the groove D2 without forming the groove D1.

The communication through holes 20 formed in a pair of the tubes 18 communicate, as described above, through these two additional air chambers SC with the outside individually.

In other words, the additional air chamber member 10 has a configuration in which the two Helmholtz resonators 19, 19 are integrally formed with the partitioning wall W as a boundary by individual communication of the two additional air chambers SC with the outside by the communication through holes 20 formed in a pair of the tubes 18.

The upper connecting part 33a and the bottom side connecting part 33b connected each other in the additional air chamber SC increase a mechanical strength of the additional air chamber member 10, and this configuration more efficiently performs a noise reduction function mentioned later by suppressing variation in volume of the additional air chamber SC.

It is desirable that the volume of the additional air chambers SC is about 50 to 250 cc. The additional air chamber SC is set to have a volume within the range, so that the Helmholtz resonators 19, 19 perform the noise reduction function while an increase in weight thereof is suppressed for weight reduction of the vehicle wheel 1. A length of the additional air chamber member 10 in the wheel circumferential direction X (see Fig. 2) is set to a half of a circumferential length of the rim 11 (the outer circumferential surface 11d) of the well 11c at maximum and approximately set in consideration of a weight of the vehicle wheel 1 and easiness in attaching to the well 11c.

Returning to Fig. 4 again, the communication through hole 20 provides communication of the additional air chamber SC with a tire air chamber MC (see Fig. 3) to be formed between the well 11c (see Fig. 3) and the tire (not shown) .

A cross sectional shape of the communication through hole 20 is not specifically limited, and in the present embodiment the shape is an oval (see Fig. 2). However, the shape may be a circle or polygon shape. When the cross section is a circle, a diameter of the communication through hole 20 is preferably equal to or greater than 5 mm. In addition, when the communication through hole 20 has a cross sectional shape which is other than a circle, it is preferable that the communication through hole 20 has a cross sectional area which is greater than a cross sectional area provided by a circle having a diameter equal to or greater than 5 mm when the cross sectional area is converted into a cross sectional area which is circle.

The length of the communication through hole 20 is set to satisfy an equation for determining a resonance frequency of the Helmholtz resonator as given by Eq. (1).

$$f0 = C \ / \ 2\pi \times \sqrt{(S \ / \ V \ (L + \alpha \times \sqrt{S}))} \quad \text{--- (1)}$$

where

f0 (Hz): resonance frequency;
C (m/s): a sound velocity in the sub air chamber (= sound velocity in the tire air chamber MC);
V (m3): a volume of the sub air chamber SC;
L (m): a length of the communication through hole 20 (tub 18);
S (m2): a cross sectional area of an opening of the communication through hole 20; and
$\alpha$: a correction coefficient.

Further, the resonance frequency f0 is equalized to a resonance frequency of the tire air chamber MC.

The tube 18 including the communication through hole 20 also has a function of a rotation stopper in the wheel circumferential direction X (see Fig. 1) of the additional air chamber member 10 by being fitted into the notch 15a in the vertical wall 15 (see Fig 1) as described above.

The rim part 14 is connected to the bottom plate 25b and the upper plate 25a as shown in Fig. 3.

In addition, as shown in Fig. 2, the rim part 14 includes a rim part 14c and a rim part 14d extending from the body 13 in the wheel circumferential direction X and a rim part 14a and a rim part 14b extending from the body 13 in a direction orthogonal with the wheel circumferential direction X (wheel width direction Y). In other words, the rim part 14 (14a, 14b, 14c, 14d) is formed with a plate like member extending from the body 13 to encircle the body 13.

As shown in Fig. 3, tips of the rim part 14a and the rim part 14b extending the wheel width direction Y (a direction orthogonal with a wheel circumferential direction X in Fig. 2) are fit into a groove 17a at the first vertical wall surface 16a and a groove 17b at a second vertical wall surface 16b.

The first vertical wall surface 16a is defined by a side surface of the vertical wall 15 inside in the wheel width direction Y (left side of a sheet of Fig. 3). Further, the second vertical wall surface 16b is defined by a side surface part 11e of the well 11c facing the first vertical wall surface 16a. The grooves 17a, 17b are formed along a circumferential direction of the outer circumferential surface 11d of the well 11c to form annular circumferential grooves. The vertical walls 15 and the side parts 11e according to the present embodiment are formed integrally with the well 11e when the rim 11 is casted. The grooves 17a, 17b are formed by a mechanical cutting process on the vertical wall 15 and the side parts 11e.

The rim part 14a extending to the first vertical wall surface 16a and the rim part 14b extending to a second vertical wall surface 16b forms, as described above, a curved surface protruding toward the outer circumferential surface 11d of the well 11c integrally with the bottom plate 25b being curved.

A thickness of the rim part 14 (14a, 14b, 14c, 14d) is set to be approximately equal to thicknesses of the bottom plate 25b and the upper plate 25a. For the rim parts 14a, 14b, 14c, 14d, a thickness and a material are appropriately selected to provide appropriate spring-constants therein.

It is assumed that the additional air chamber member 10 according to the present embodiment is made as a resin molding. When the additional air chamber member 10 is a resin molding, it is desirable to use a resin suitable for the blow molding in consideration of weight saving, an increase in a mass productivity, manufacturing cost saving, securing air tightness of the additional air chamber SC and bending fatigue. Particularly, polypropylene, having a resistance to cyclic ending fatigue is preferable.

Next, positions of the additional air chamber members 10 in the vehicle wheel 1 according to the embodiment will be described below.

The vehicle wheel 1 includes, as described above, two pairs of the additional air chamber members 10 (see Fig. 4) respectively including two Helmholtz resonators 19, 19 (see Fig. 4) formed integrally on the outer circumferential surface 11d (see Fig. 1 of the well 11c (see Fig. 1).

Fig. 5 is a side view schematically showing positions of the first additional air chamber member 10a and the second additional air chamber member 10b, which are a pair of the additional air chamber members 10, and their respective communication through holes 20a, 20b, 20c, 20d.

The vehicle wheel 1 according to the present embodiment includes, as shown in Fig. 5, the first additional air chamber member 10a including the first Helmholtz resonator 19a and the second Helmholtz resonator 19b formed integrally with each other and the second additional air chamber member 10b including the third Helmholtz resonator 19c and the fourth Helmholtz resonator 19d formed integrally with each other.

As described above, each of the additional air chambers SC, SC of the first Helmholtz resonator 19a and the second Helmholtz resonator 19b is formed by partitioning the inside of the first additional air chamber member 10a (hollow space of the body 13 (see Fig. 4)) with the partitioning wall W at a middle in the longitudinal direction of the body 13. In other words, the first Helmholtz resonator 19a and the second Helmholtz resonator 19b are formed integrally with each other through the partitioning wall W, and the additional air chambers SC, SC thereof are successively arranged in the wheel circumferential direction X via the partitioning wall W.

Further, each of the additional air chambers SC, SC of the third Helmholtz resonator 19a and the fourth Helmholtz resonator 19d is formed by partitioning the inside of the fourth additional air chamber member 10d (hollow space of the body 13 (see Fig. 4)) with the partitioning wall W at a middle in the longitudinal direction of the body 13. In other words, the third Helmholtz resonator 19c and the third Helmholtz resonator 19d are formed integrally with each other through the partitioning wall W, and the additional air chambers SC, SC thereof are arranged in line in the wheel circumferential direction X via the partitioning wall W.

In the vehicle wheel 1, the first additional air chamber member 10a and the second additional air chamber member 10b are arranged in the tire air chamber MC to face each other across the wheel rotation center Ax. More specifically, the first additional air chamber member 10a and the second additional air chamber member 10b are arranged such that the communication through holes 20a, 20b, 20c, 20d of the first to fourth Helmholtz resonators 19a, 19b, 19c, 19d are spaced in the wheel circumferential direction X with an angle interval of approximately 90 degrees about the wheel rotation center Ax, respectively. The interval between the communication through holes 20a, 20b, 20c, 20d is defined as an interval between centers of the openings of the adjoining communication through holes 20a, 20b, 20c, 20d.

Next, advantageous effects of the vehicle wheel 1 according to the embodiment will be described below.

The vehicle wheel 1 includes the four Helmholtz resonators 19, i.e., the first to fourth Helmholtz resonators 19a, 19b, 19c, 19d having the communication through holes 20a arranged at the angle interval of approximately 90 degrees in the wheel circumferential direction X on the well 11c. The first additional air chamber member 10a including the first and second Helmholtz resonators 19a, 19b are formed integrally with each other and the second additional air chamber member 10b including a third and fourth Helmholtz resonators19c, 19d formed integrally with each other. According to the vehicle wheel 1, like a vehicle wheel including four conventional Helmholtz resonators (four additional air chambers), sufficient suppression of the road noise and vibrations caused by the air column resonance noise can be provided without unevenness in noise reduction. Further the number of the additional air chambers arranged on the well 11c can be reduced to two, unlike the conventional vehicle wheel (for example, JP 2012-51397 A). Accordingly, the vehicle wheel 1 can have reduction in the manufacturing cost, simplifying the manufacturing process, and reduction in wheel weight.

Further, in the vehicle wheel 1, the first additional air chamber member 10a and the second additional air chamber member 10b are arranged to face each ocher across the wheel rotation center Ax. Accordingly, in the vehicle wheel 1, wheel unbalance (static balance) caused in one of the additional air chamber members 10 can be cancelled by another additional air chamber member 10, so that it becomes unnecessary to install a counter weight at a counter position of the additional air chamber member 10. Accordingly the weight of the wheel 1 can be further reduced.

Though the embodiment of the present invention has been described above, the present invention is not limited to the embodiment, but can be modified in various modes.

In the present invention, there is no limitation in formation position of the communication as long as a pair of the communication through holes 20 of the additional air chamber member 10 are spaced at an angle interval of 90 degrees around the wheel rotation center Ax.

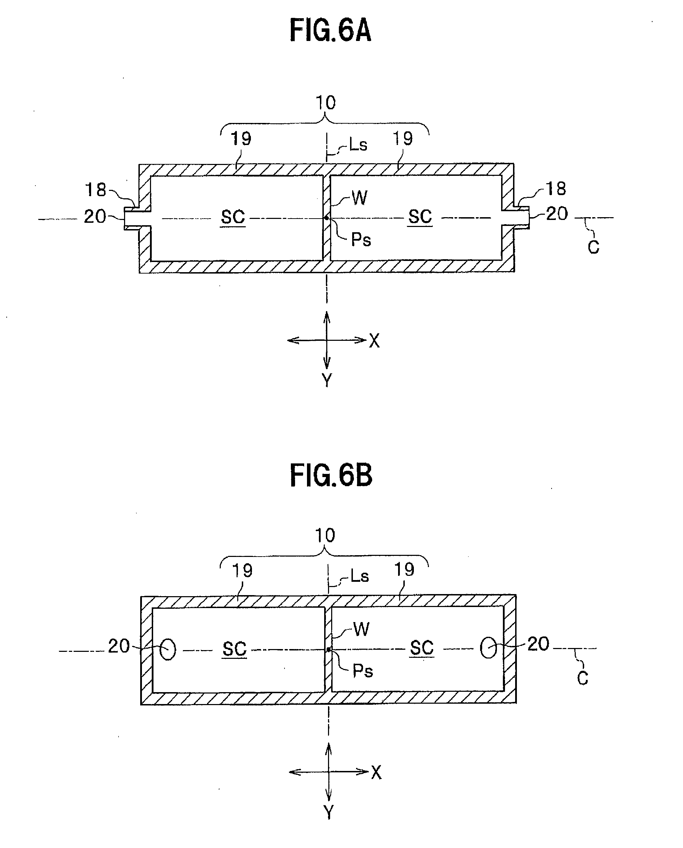

Figs. 6A and 6B are schematic cross section views schematically showing formation positions of the communication through hole 20, wherein the additional air chamber member 10 is taken along a curved plane extending along a curvature in the longitudinal direction of the additional air chamber member 10.

The communication through hole 20 in the embodiment is formed inside the tube 18 extending in the wheel width direction Y from the body 13 as shown in Fig. 2. However, in the present invention, as shown in Fig. 6A, the communication through hole 20 can be formed inside the tube 18 protruding in the wheel circumferential direction X.

Further, the communication through hole 20 can be configured, as shown in Fig. 6B (viewed in a direction Rd ( see Fig. 5) toward the rotation axis Ax), as an opening which is open (in a radial direction Rd) on an upper side of the additional air chamber member 10 (a side of the upper plate 25a shown in Fig. 3).

The additional air chamber member 10 having such communication through holes 20 provides a low wheel unbalance because the tube 18 is arranged on a side of a center part in the wheel width direction Y.

In Figs. 6A and 6B, the Helmholtz resonator 19 has the additional air chamber SC and the tube 18 as a duct to provide Helmholtz resonation.

In the present invention, there is no limitation in a manner of partitioning as long as the inside (hollow space) of the additional air chamber member 10 is partitioned into two additional air chambers SC with the partitioning wall W.

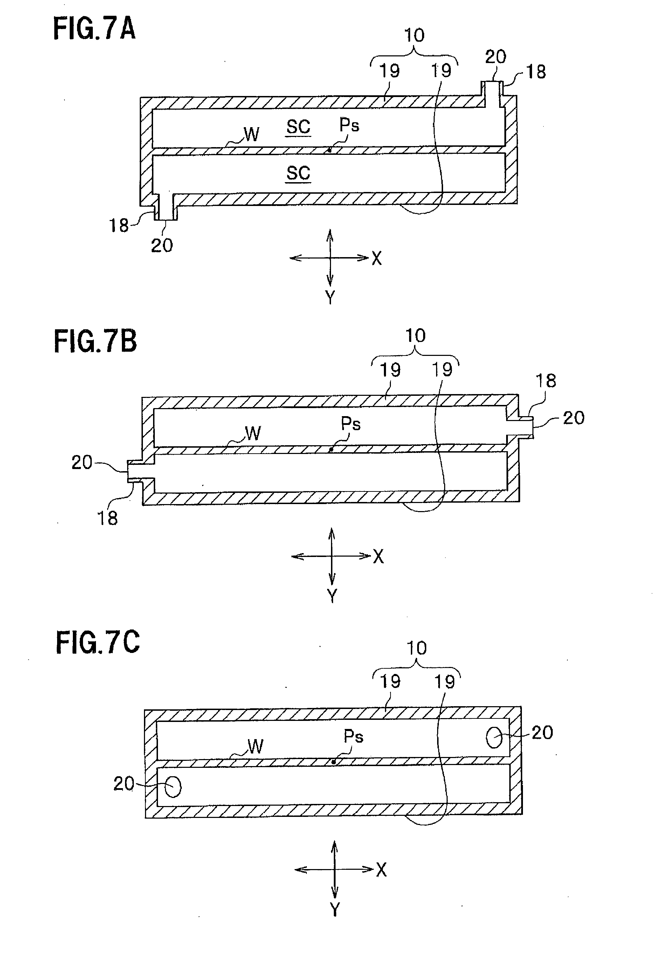

Figs. 7A to 7C are schematic cross section views of the additional air chamber members 10 in which two Helmholtz resonators 19 are integrally formed such that two additional air chambers SC are disposed side by side in a wheel width direction through a portioning wall W, and is a schematic cross section in which the additional air chamber SC integrally formed integrally, taken on a curved plane having a curvature in the longitudinal direction.

As shown in Figs. 7A to 7C, the additional air chamber member 10 including the two Helmholtz resonators 19 formed integrally with each other has the additional air chambers SC arranged in line (side by side) in the wheel width direction Y. In other words, the inside (hollow space) of the additional air chamber member 10 formed to have a longitudinal direction thereof along the wheel circumferential direction X is partitioned with the partitioning wall W extending in the wheel circumferential direction X to form two additional air chambers.

The additional air chamber member 10 is assumed to be formed with a resin.

Though the additional air chamber member 10 is formed with the resin, the partitioning wall W extends along the wheel circumferential direction X, which further increases a strength of the two Helmholtz resonators 19. Particularly, when a configuration having the upper connecting part 33a and the bottom side connecting part 33b is used, this configuration is preferable because the partitioning wall W increases a plane stiffness of the upper plate 25a and the bottom plate 25b (see Fig. 3).

Further, the tubes 18 having the communication through holes 20 can be formed to protrude in the wheel width direction Y as shown in Fig. 7A, or in the wheel circumferential direction X as shown in Fig. 7B.

In addition, as shown in Fig. 7C, the openings may be configured to open at an upper side of the two Helmholtz resonators 19 (on a side of the upper plate 25a).

Further, a pair of the additional air chamber members 10 are provided to face each other across the wheel rotation center Ax similar to the vehicle wheel 1 shown in Fig. 5 in which the pair of the additional air chamber members 10 have the same configuration. However, at least one of the additional air chamber members 10 may have one of configurations shown in Figs. 7A to 7C.

The above-described embodiment, as shown in Fig. 5, the communication through holes 20a, 20b, 20c, 20d are provided at ends in the wheel circumferential direction X of the first additional air chamber members 10a, 10b, respectively. However, the position of the communication through holes 20a, 20b, 20c, 20d may be any position in the wheel circumferential direction X as long as the communication through holes 20a, 20b, 20c, 20d are arranged at a angle interval of approximately 90 degrees around the wheel rotation center Ax.

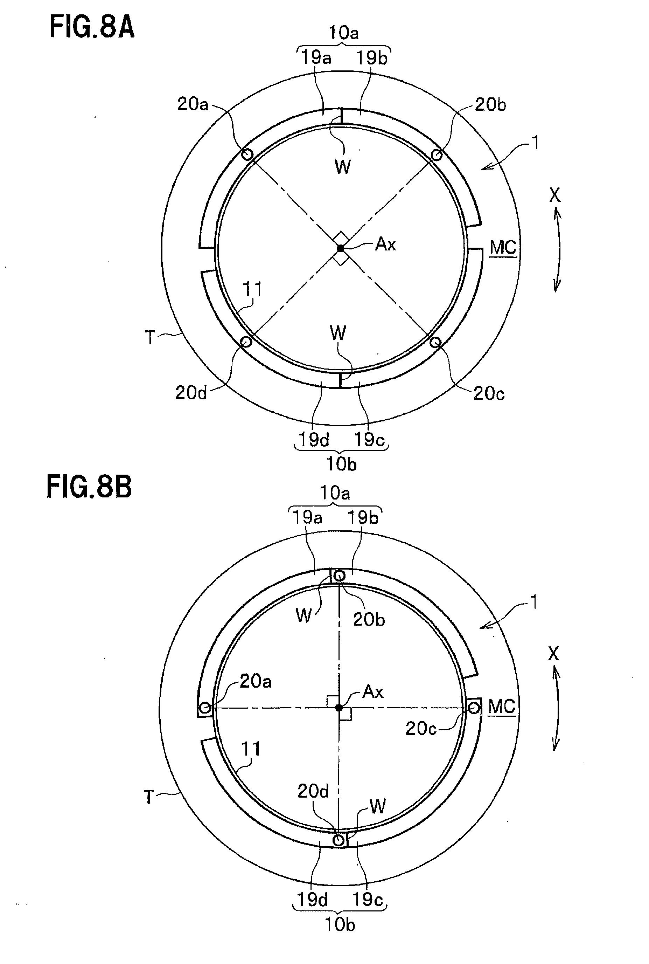

Fig. 8A and 8B are side views schematically showing the first additional chamber 10a and the second additional chamber 10b of the vehicle wheel 1 according to another embodiment, and positions of the communication through holes 20a, 20b, 20c, 20d.

As shown in Fig. 8A, in the vehicle wheel 1, the communication through holes 20a, 20b, 20c, 20d are formed at middle parts in the wheel circumferential direction X of the first to fourth Helmholtz resonators 19a, 19b, 19c, 19d. In Fig. 8A, a reference 10a denotes a first additional air chamber member, a reference 10b denotes a second additional air chamber member, a reference 11 denotes the rim, a reference W denotes the partitioning wall, a reference T denotes a tire tread, a reference MC denotes the tire air chamber, and a reference Ax denotes the rotation center.

As shown in Fig. 8B, in the vehicle wheel 1, a communication through hole 20a of the first Helmholtz resonator 19a is formed at an end of the first additional air chamber member 10a in the wheel circumferential direction X. The communication through hole 20b of the first Helmholtz resonator 19b is formed near the partitioning wall W of the first additional air chamber member 10a. The communication through hole 20c of the first Helmholtz resonator 19c is formed at an end edge of the second additional air chamber member 10b in the wheel circumferential direction X. The communication through hole 20d of the fourth Helmholtz resonator 19d is formed near the partitioning wall W of the second additional air chamber member 10b in the wheel circumferential direction X of the first additional air chamber member 10a. In Fig. 8B, a reference 11 denotes the rim, a reference T denotes the tire tread, a reference MC denotes the tire air chamber, and the reference Ax denotes the wheel rotation center.

Further modifications are as follows:

In Figs. 6A, 6B, the two additional air chambers SC are partitioned by the wall W, and the Helmholtz resonators 19, 19 of the at least one of the first and second first additional air chamber members 10a, 10b are formed to have the communication through holes 20, 20 at line-symmetrical positions each other with respect to the wall W (line Ls) extending in the wheel circumferential direction Y on a cross section of the additional air chamber member 10 taken along a curved plane extending along a curvature in the longitudinal direction of the additional air chamber member 10 (a cross section in parallel to the well 11c)c. Further, the Helmholtz resonators 19, 19 have line-symmetrical shapes with respect to the center line C thereof on a cross section of the additional air chamber member 10 taken along a curved plane extending along a curvature in the longitudinal direction of the additional air chamber member 10 ( the cross section in parallel to the well 11c). Further, this modification can be combined with the above-described embodiments and with other modifications here as long as there is no inconsistency.

In Figs 6A, 6B, and 7A to 7C, the Helmholtz resonators 19, 19 of the at least one of the first and second first additional air chamber members are formed to have the communication through holes 20, 20 at point-symmetrical positions each other with respect to a center point Ps of the wall W extending in the wheel width direction Y on a cross section of the additional air chamber member 10 taken along a curved plane extending along a curvature in the longitudinal direction of the additional air chamber member 10 (the cross section in parallel to the well 11c). Further, the Helmholtz resonators 19, 19 have line-symmetrical shapes on the cross section of the additional air chamber member 10 taken along the curved plane extending along a curvature in the longitudinal direction of the additional air chamber member 10 (the cross section in parallel to the well 11c). This facilitates to make molds for shaping the two additional air chamber members 10a, 10b. Further, this modification can be combined with the above-described embodiments and with other modifications here as long as there is no inconsistency.

In Figs. 2, 5, 6B, and 7C, the communication through holes 20 of the Helmholtz resonators in at least one of the first and second additional air chamber members 10a, 10b open in a same direction from the additional air chamber member 10. This facilitates to form the notches 15a. Further, this modification can be combined with the above-described embodiments and with other modifications here as long as there is no inconsistency.

In Figs. 6A, 7A, and 7B, the communication through holes 20 of the Helmholtz resonators in at least one of the first and second additional air chamber members 10a, 10b open in opposite directions from the additional air chamber member 10. This improves a wheel balance in the wheel width direction Y. Further, this modification can be combined with the above-described embodiments and with other modifications here as long as there is no inconsistency.

In Figs. 2, 4, 5, 7A, the communication through holes 20, 20 open in the wheel width direction Y of the vehicle wheel. This prevents the additional air chamber members 10, 10 from rotation in the wheel circumferential direction X. Further, this modification can be combined with the above-described embodiments and with other modifications here as long as there is no inconsistency.

In Figs. 6A and 7B, the communication through holes 20 open in the wheel circumferential direction X of the vehicle wheel. This eliminates the necessity of making the notches 15a. Further, this modification can be combined with the above-described embodiments and with other modifications here as long as there is no inconsistency.

In Figs. 6B and 7C the communication through holes 20 open in the wheel radial direction Rd of the vehicle wheel. This eliminates the necessity of making the notches 15a. Further, this modification can be combined with the above-described embodiments and with other modifications here as long as there is no inconsistency.

In Figs. 6A and 6B the communication through holes 20 are arranged in a center line C of the Helmholtz resonators in at least one of the first and second additional air chamber members in the wheel width direction. Further, this modification can be combined with the above-described embodiments and with other modifications here as long as there is no inconsistency.

In Figs. 7A to 7C, the two additional air chambers 10a, 10b are partitioned by a wall W that extends in the wheel circumferential direction X. This improves a wheel balance in the wheel width direction Y. Further, this modification can be combined with the above-described embodiments and with other modifications here as long as there is no inconsistency.

In Figs. 2, 4, 5, and 7A, the communication through holes 20 open in the wheel width direction Y of the vehicle wheel. This enhances a stiffen of the additional air chamber members 10a, 10b in the wheel circumferential direction X while the elasticity between the additional air chambers 10a, 10b is maintained. Further, this modification can be combined with the above-described embodiments and with other modifications here as long as there is no inconsistency.

Figs. 7A to 7C, the communication through holes 20, 20 open at different positions in the wheel width direction Y of the vehicle wheel. This allows the wall W to extend in the wheel circumferential direction X. Further, this modification can be combined with the above-described embodiments and with other modifications here as long as there is no inconsistency. Brief Description of Reference Symbol

| | |
|---|---|
| 1 | vehicle wheel |
| 10 | additional air chamber member |
| 10a | first additional air chamber member |
| 10b | second additional air chamber member |
| 11c | well |
| 11d | outer circumferential surface |
| 13 | body |
| 14 | rim part |
| 19 | Helmholtz resonator |
| 19a | first Helmholtz resonator |
| 19b | second Helmholtz resonator |
| 19c | third Helmholtz |
| 19d | fourth Helmholtz resonator |
| 20 (20a, 20b, 20c, 20d) | communication through hole |
| 25a | upper plate |
| 25b | bottom plate |
| W | partitioning wall |
| X | wheel circumferential direction |
| Y | wheel width direction |
| Ax | wheel rotation center |
| SC | additional air chamber |
| MC | tire air chamber |

In a vehicle wheel 1, the communication through holes 20a, 20b, 20c, 20d of the first Helmholtz resonators 19a, 19b,19c,19d are arranged at an angle interval of approximately 90 degrees around a wheel rotation center Ax. The Helmholtz resonators 19a, 19b are formed integrally each other to form the first additional air chamber member 10a. The Helmholtz resonators 19c, 19d are formed integrally each other to form the second additional air chamber member 10b. The additional air chamber member 10a, 10b includes two additional air chambers SC therein. Each of the communication through holes 20a, 20b, 20c, 20d communicates the tire air chamber MC individually.

**Claims**

1. A vehicle wheel comprising:

   four Helmholtz resonators (19) each including a communication through hole and an additional air chamber (SC) communicating with a tire air chamber (MC) through the communication through hole (20),
   wherein the communication through holes (20) of the four Helmholtz resonators are arranged at angle intervals of substantially 90 degrees around a wheel rotation center axis (Ax) of the vehicle wheel,
   wherein the four Helmholtz resonators include a first pair of two of the four Helmholtz resonators (19) and a second pair of the remaining two of the four Helmholtz resonators (19),
   wherein the first pair of the two of the four Helmholtz resonators are integrally formed to form a first additional air chamber member (10a) arranged in the tire air chamber,

wherein the second pair of the two of the four Helmholtz resonators are integrally formed to form a second additional air chamber member (10b) arranged in the tire air chamber, and

wherein each of the first and second additional air chamber members includes a body (13) extending in a wheel circumferential direction (X), the body including:

an upper plate;

a bottom plate;

a hollow space extending in the wheel circumferential direction (X) between the upper plate and the bottom plate; and

a partitioning wall (W) which is formed such that one of the upper plate and the bottom plate is recessed toward an inside of the hollow space and connected to the other one of the upper plate and the bottom plate or such that both of the upper plate and the bottom plate are recessed toward the inside of the hollow space and connected to one another, thereby partitioning the hollow space into the two additional air chambers (SC) of the two Helmholtz resonators (19) forming the each of the first and second additional air chamber members,

**characterized in that** each of the first and second additional air chamber members further includes a rim part (14) which is a plate like member extending from and encircling the body of the each of the first and second addilional air chamber members in the wheel circumferential direction (X) and in the wheel width direction (Y).

2. The vehicle wheel as claimed in claim 1, wherein the first and second additional air chamber members (10a, 10b) are arranged in the tire air chamber (MC) so as to face each other across a wheel rotation center axis (Ax) of the vehicle wheel.

3. The vehicle wheel as claimed in either of claim 1 or 2,

wherein at least one of the first and second additional air chamber members (10a, 10b) is formed to have a longitudinal direction thereof in the wheel circumferential direction (X) with a resin, and

wherein the two additional air chambers of the at least one of the first and second additional air chamber members are separated from one another with the partitioning wall (W) so as to be arranged side by side in a wheel width direction of the vehicle wheel.

4. The vehicle wheel as claimed in claim 1, wherein, in at least one of the first and second additional air chamber members (10a, 10b), the partitioning wall (W) is formed to extend in the wheel width direction (Y), and the two Helmholtz resonators (19, 19) are formed to have the communication through holes at line-symmetrical positions each other with respect to the partitioning wall (W) on a cross section of the additional air chamber member (10) taken along a curved plane extending along a curvature in the longitudinal direction of the additional air chamber member (10).

5. The vehicle wheel as claimed in claim 1, wherein, in at least one of the first and second additional air chamber members (10a, 10b), the partitioning wall (W) is formed to extend in the wheel width direction or in the wheel circumferential direction, and the two Helmholtz resonators (19, 19) are formed to have the communication through holes at point-symmetrical positions each other with respect to a center point (Ps) of the partitioning wall (W) on a cross section of the additional air chamber member (10) taken along a curved plane extending along a curvature in the longitudinal direction of the additional air chamber member (10).

6. The vehicle wheel as claimed in claim 1, wherein the communication through holes (20) of the Helmholtz resonators in at least one of the first and second additional air chamber members (10a, 10b) open in a same direction from the at least one of the first and second additional air chamber members.

7. The vehicle wheel as claimed in claim 1, wherein the communication through holes (20) of the Helmholtz resonators in at least one of the first and second additional air chamber members (10a, 10b) open in opposite directions from the at least one of the first and second additional air chamber members.

8. The vehicle wheel as claimed in claim 1, wherein the communication through holes (20) open in the wheel width direction (Y) of the vehicle wheel.

9. The vehicle wheel as claimed in claim 1, wherein the communication through holes (20) open in the wheel circumferential direction (X) of the vehicle wheel.

10. The vehicle wheel as claimed in claim 1, wherein the communication through holes (20) open in a wheel radial direction (Rd) of the vehicle wheel.

11. The vehicle wheel as claimed in claim 1, wherein the communication through holes (20) are arranged on a center line (C) of the Helmholtz resonators in at least one of the first and second additional air chamber members in the wheel width direction.

12. The vehicle wheel as claimed in claim 1, wherein the partitioning wall (W) of at least one of the first and second additional air chamber members is formed to extend in the wheel circumferential direction (X).

13. The vehicle wheel as claimed in claim 1, wherein the partitioning wall (W) of at least one of the first and second additional air chamber members is formed to extend in the wheel width direction (Y) of the vehicle wheel.

14. The vehicle wheel as claimed in claim 1, wherein the communication through holes (20) open at different positions in the wheel width direction (Y) of the vehicle wheel.

**Patentansprüche**

1. Fahrzeugrad, welches aufweist:

vier Helmholtz-Resonatoren (19), die jeweils ein Verbindungsdurchgangsloch und eine zusätzliche Luftkammer (SC) enthalten, die durch das Verbindungsdurchgangsloch (20) mit einer Reifenluftkammer (MC) in Verbindung steht,
wobei die Verbindungsdurchgangslöcher (20) der vier Helmhoftz-Resonatoren mit Winkelintervallen von angenähert 90 Grad um eine Raddrehmittelachse (Ax) des Fahrzeugsrads herum angeordnet sind,
wobei die vier Helmholtz-Resonatoren ein erstes Paar von zwei der vier Helmholtz-Resonatoren (19) sowie ein zweites Paar der verbleibenden zwei der vier Helmholtz-Resonatoren (19) enthalten,
wobei das erste Paar der zwei der vier Helmholtz-Resonatoren integriert ausgebildet ist, um ein erstes zusätzliches Luftkammerelement (10a) zu bilden, das in der Reifenluftkammer angeordnet ist,
wobei das zweite Paar der zwei der vier Helmholtz-Resonatoren integriert ausgebildet ist, um ein zweites zusätzliches Luftkammerelement (10b) zu bilden, das in der Reifenluftkammer angeordnet ist, und
wobei jedes der ersten und zweiten zusätzlichen Luftkammerelemente einen Körper (13) enthält, der sich in einer Radumfangsrichtung (X) erstreckt, wobei der Körper enthält:

eine obere Platte;
eine Bodenplatte;
einen Hohlraum, der sich in der Radumfangsrichtung (X) zwischen der oberen Platte und der Bodenplatte erstreckt; und
eine Trennwand (W), die derart ausgebildet ist, dass eine der oberen Platte und der Bodenplatte zur Innenseite des Hohlraums hin vertieft ist und mit der anderen der oberen Platte und der Bodenplatte verbunden ist, oder derart, dass sowohl die obere Platte als auch die Bodenplatte zur Innenseite des Hohlraums hin vertieft sind und miteinander verbunden sind, um hierdurch den Hohlraum in die zwei zusätzlichen Luftkammern (SC) der zwei Helmholtz-Resonatoren (19) zu unterteilen, die jedes der ersten und zweiten zusätzlichen Luftkammerelemente bilden,
**dadurch gekennzeichnet, dass** jedes der ersten und zweiten zusätzlichen Luftkammerelemente ferner ein Felgenteil (14) enthält, das ein plattenartiges Element ist, welches sich von dem Körper jedes der ersten und zweiten zusätzlichen Luftkammerelemente in der Radumfangsrichtung (X) erstreckt und diese umgibt und in der Radbreitenrichtung (Y) erstreckt.

2. Das Fahrzeugrad nach Anspruch 1, wobei die ersten und zweiten zusätzlichen Luftkammerelemente (10a, 10b) in der Reifenluftkammer (MC) so angeordnet sind, dass sie quer zur Raddrehmittelachse (Ax) des Fahrzeugrads aufeinander zu weisen.

3. Das Fahrzeugrad nach einem der Ansprüche 1 oder 2, wobei eine Längsrichtung zumindest eines der ersten und zweiten zusätzlichen Luftkammerelemente (10a, 10b) in der Radumfangsrichtung (X) mit Kunststoff ausgebildet ist;

und

wobei die zwei zusätzlichen Luftkammern von zumindest einem der ersten und zweiten zusätzlichen Luftkammerelemente voneinander getrennt sind, wobei die Trennwand (W) die Seite an Seite in Radbreitenrichtung des Fahrzeugrads anzuordnen ist.

4. Das Fahrzeugrad nach Anspruch 1, wobei in zumindest einem der ersten und zweiten zusätzlichen Luftkammerelemente (10a, 10b) die Trennwand (W) so ausgebildet ist, dass sie sich in der Radbreitenrichtung (Y) erstreckt, und die zwei Helmholtz-Resonatoren (19, 19) so ausgebildet sind, dass sie die Verbindungsdurchgangslöcher an einander liniensymmetrischen Positionen in Bezug auf die Trennwand (W) auf einem Querschnitt des zusätzlichen Luftkammerelements (10) haben, der entlang einer gekrümmten Ebene gelegt ist, die sich entlang einer Krümmung in der Längsrichtung des zusätzlichen Luftkammerelements (10) erstreckt.

5. Das Fahrzeugrad nach Anspruch 1, wobei in zumindest einem der ersten und zweiten zusätzlichen Luftkammerelemente (10a, 10b) die Trennwand (W) so ausgebildet ist, dass sie sich in der Radbreitenrichtung oder in der Radumfangsrichtung erstreckt, und die Verbindungsdurchgangslöcher der zwei Helmholtz-Resonatoren (19, 19) an einander punktsymmetrischen Positionen in Bezug auf einen Mittelpunkt (Ps) der Trennwand (W) auf einem Querschnitt des zusätzlichen Luftkammerelements (10) ausgebildet sind, der entlang einer gekrümmten Ebene gelegt ist, die sich entlang einer Krümmung in der Längsrichtung des zusätzlichen Luftkammerelements (10) erstreckt.

6. Das Fahrzeugrad nach Anspruch 1, wobei sich die Verbindungsdurchgangslöcher (20) der Helmholtz-Resonatoren in zumindest einem der ersten und zweiten zusätzlichen Luftkammerelemente (10a, 10b) von dem zumindest einen der ersten und zweiten zusätzlichen Luftkammerelemente in gleicher Richtung öffnen.

7. Das Fahrzeugrad nach Anspruch 1, wobei sich die Verbindungsdurchgangslöcher (20) der Helmholtz-Resonatoren in zumindest einem der ersten und zweiten zusätzlichen Luftkammerelemente (10a, 10b) von dem zumindest einen der ersten und zweiten zusätzlichen Luftkammerelemente in entgegengesetzte Richtungen öffnen.

8. Das Fahrzeugrad nach Anspruch 1, wobei sich die Verbindungsdurchgangslöcher (20) in der Radbreitenrichtung (Y) des Fahrzeugrads öffnen.

9. Das Fahrzeugrad nach Anspruch 1, wobei sich die Verbindungsdurchgangslöcher (20) in der Radumfangsrichtung (X) des Fahrzeugrads öffnen.

10. Das Fahrzeugrad nach Anspruch 1, wobei sich die Verbindungsdurchgangslöcher (20) in radialer Radrichtung (Rd) des Fahrzeugrads öffnen.

11. Das Fahrzeugrad nach Anspruch 1, wobei die Verbindungsdurchgangslöcher (20) in zumindest einem der ersten und zweiten zusätzlichen Luftkammerelemente in der Radbreitenrichtung auf einer Mittellinie (C) der Helmholtz-Resonatoren angeordnet sind.

12. Das Fahrzeugrad nach Anspruch 1, wobei die Trennwand (W) von zumindest einem der ersten und zweiten zusätzlichen Luftkammerelemente so ausgebildet ist, dass sie sich in der Radumfangsrichtung (X) erstreckt.

13. Das Fahrzeugrad nach Anspruch 1, wobei die Trennwand (W) von zumindest einem der ersten und zweiten zusätzlichen Luftkammerelemente so ausgebildet ist, dass sie sich in der Radbreitenrichtung (Y) des Fahrzeugrads erstreckt.

14. Das Fahrzeugrad nach Anspruch 1, wobei sich die Verbindungsdurchgangslöcher (20) an unterschiedlichen Positionen in der Radbreitenrichtung (Y) des Fahrzeugrads öffnen.


**Revendications**

1. Roue de véhicule comprenant :

   quatre résonateurs de Helmholtz (19) comportant chacun un trou traversant de communication et une chambre à air supplémentaire (SC) communiquant avec une chambre à air de pneu (MC) via le trou traversant de communication (20),

dans laquelle les trous traversants de communication (20) des quatre résonateurs de Helmholtz sont agencés à des intervalles d'angles de sensiblement 90 degrés autour d'un axe central de rotation de roue (Ax) de la roue de véhicule,

dans laquelle les quatre résonateurs de Helmholtz comportent une première paire de deux des quatre résonateurs de Helmholtz (19) et une seconde paire des deux restants des quatre résonateurs de Helmholtz (19),

dans laquelle la première paire des deux des quatre résonateurs de Helmholtz est formée d'un seul tenant pour former un premier organe de chambre à air supplémentaire (10a) agencé dans la chambre à air de pneu,

dans laquelle la seconde paire des deux des quatre résonateurs de Helmholtz est formée d'un seul tenant pour former un second organe de chambre à air supplémentaire (10b) agencé dans la chambre à air de pneu, et

dans laquelle chacun des premier et second organes de chambre à air supplémentaires comporte un corps (13) s'étendant dans une direction circonférentielle de roue (X), le corps comportant :

une plaque haute ;

une plaque basse ;

un espace creux s'étendant dans la direction circonférentielle de roue (X) entre la plaque haute et la plaque basse ; et

une cloison de séparation (W) qui est formée de sorte que l'une de la plaque haute et de la plaque basse soit en retrait vers un intérieur de l'espace creux et raccordée à l'autre de la plaque haute et de la plaque basse ou de sorte que la plaque haute et la plaque basse soient toutes deux en retrait vers l'intérieur de l'espace creux et raccordées l'une à l'autre, séparant ainsi l'espace creux en les deux chambres à air supplémentaires (SC) des deux résonateurs de Helmholtz (19) formant chacun des premier et second organes de chambre à air supplémentaires,

**caractérisée en ce que** chacun des premier et second organes de chambre à air supplémentaires comporte en outre une partie de jante (14) qui est un organe de type plaque s'étendant à partir du et encerclant le corps de chacun des premier et second organes de chambre à air supplémentaires dans la direction circonférentielle de roue (X) et la direction de largeur de roue (Y).

2. Roue de véhicule selon la revendication 1, dans laquelle les premier et second organes de chambre à air supplémentaires (10a, 10b) sont agencés dans la chambre à air de pneu (MC) de façon à être en regard l'un de l'autre à travers un axe central de rotation de roue (Ax) de la roue de véhicule.

3. Roue de véhicule selon l'une ou l'autre de la revendication 1 ou 2,
dans laquelle au moins l'un des premier et second organes de chambre à air supplémentaires (10a, 10b) est formé pour avoir sa direction longitudinale dans la direction circonférentielle de roue (X) avec une résine, et
dans laquelle les deux chambres à air supplémentaires du au moins un des premier et second organes de chambre à air supplémentaires sont séparées l'une de l'autre par la cloison de séparation (W) de façon à être agencées côte à côte dans une direction de largeur de roue de la roue de véhicule.

4. Roue de véhicule selon la revendication 1, dans laquelle, dans au moins l'un des premier et second organes de chambre à air supplémentaire (10a, 10b), la cloison de séparation (W) est formée pour s'étendre dans la direction de largeur de roue (Y), et les deux résonateurs de Helmholtz (19, 19) sont formés pour avoir les trous traversants de communication à des positions symétriques en ligne par rapport à la cloison de séparation (W) sur une section de l'organe de chambre à air supplémentaire (10) prise le long d'un plan incurvé s'étendant le long d'une courbure dans la direction longitudinale de l'organe de chambre à air supplémentaire (10).

5. Roue de véhicule selon la revendication 1, dans laquelle, dans au moins l'un des premier et second organes de chambre à air supplémentaires (10a, 10b), la cloison de séparation (W) est formée pour s'étendre dans la direction de largeur de roue ou dans la direction circonférentielle de roue, et les deux résonateurs de Helmholtz (19, 19) sont formés pour avoir les trous traversants de communication à des positions symétriques en point par rapport à un point central (Ps) de la cloison de séparation (W) sur une section de l'organe de chambre à air supplémentaire (10) prise le long d'un plan incurvé s'étendant le long d'une courbure dans la direction longitudinale de l'organe de chambre à air supplémentaire (10).

6. Roue de véhicule selon la revendication 1, dans laquelle les trous traversants de communication (20) des résonateurs de Helmholtz dans au moins l'un des premier et second organes de chambre à air supplémentaires (10a, 10b) s'ouvrent dans une même direction depuis le au moins un des premier et second organes de chambre à air supplémentaires.

7. Roue de véhicule selon la revendication 1, dans laquelle les trous traversants de communication (20) des résonateurs de Helmholtz dans au moins l'un des premier et second organes de chambre à air supplémentaires (10a, 10b) s'ouvrent dans des directions opposées depuis le au moins un des premier et second organes de chambre à air supplémentaires.

8. Roue de véhicule selon la revendication 1, dans laquelle les trous traversants de communication (20) s'ouvrent dans la direction de largeur de roue (Y) de la roue de véhicule.

9. Roue de véhicule selon la revendication 1, dans laquelle les trous traversants de communication (20) s'ouvrent dans la direction circonférentielle de roue (X) de la roue de véhicule.

10. Roue de véhicule selon la revendication 1, dans laquelle les trous traversants de communication (20) s'ouvrent dans une direction radiale de roue (Rd) de la roue de véhicule.

11. Roue de véhicule selon la revendication 1, dans laquelle les trous traversants de communication (20) sont agencés sur une ligne centrale (C) des résonateurs de Helmholtz dans au moins l'un des premier et second organes de chambre à air supplémentaires dans la direction de largeur de roue.

12. Roue de véhicule selon la revendication 1, dans laquelle la cloison de séparation (W) d'au moins l'un des premier et second organes de chambre à air supplémentaires est formée pour s'étendre dans la direction circonférentielle de roue (X).

13. Roue de véhicule selon la revendication 1, dans laquelle la cloison de séparation (W) d'au moins l'un des premier et second organes de chambre à air supplémentaires est formée pour s'étendre dans la direction de largeur de roue (Y) de la roue de véhicule.

14. Roue de véhicule selon la revendication 1, dans laquelle les trous traversants de communication (20) s'ouvrent à des positions différentes dans la direction de largeur de roue (Y) de la roue de véhicule.

EP 2 783 879 B1

# FIG.1

FIG.2

# FIG.3

Y

# FIG.4

EP 2 783 879 B1

# FIG.5

# FIG.6A

# FIG.6B

**FIG.7A**

**FIG.7B**

**FIG.7C**

FIG.8A

FIG.8B

**EP 2 783 879 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012051397 A
- JP 2008030505 A
- EP 2052876 A1